# EUROPEAN PATENT APPLICATION

(11) **EP 4 300 871 A1**
(43) Date of publication of application: **03.01.2024**
(21) Application number: 21932123.9
(22) Date of filing: 24.03.2021
(51) Int. Cl.: H04L 5/26, H04J 4/00

(54) **COMMUNICATION METHOD, APPARATUS, AND SYSTEM**

(71) Applicant: Huawei Technologies Co., Ltd., Shenzhen, Guangdong 518129 (CN)
(72) Inventor: LI, Xianghua, Shenzhen, Guangdong 518129 (CN); ZHAO, Jianping, Shenzhen, Guangdong 518129 (CN); ZHANG, Guanxi, Shenzhen, Guangdong 518129 (CN)
(74) Representative: MERH-IP Matias Erny Reichl Hoffmann Patentanwälte PartG mbB
(86) International application number: PCT/CN2021/082700
(87) International publication number: WO 2022/198495

(57) **Abstract**

This application provides a communication method, apparatus, and system, to receive and send signals simultaneously through different bands, so as to reduce a communication delay. Specifically, a network device sends a first downlink signal to a terminal device through a downlink slot of a first band, and simultaneously, the network device receives a first uplink signal from the terminal device through an uplink slot of a second band, where there is an association relationship between an uplink-downlink slot configuration of the first band and an uplink-downlink slot configuration of the second band. In this application, a plurality of bands may share transmit and receive channel resources of the network device, to reduce costs and power consumption of the network device.

## Description

### TECHNICAL FIELD

This application relates to the communication field, and in particular, to a communication method, apparatus, and system.

### BACKGROUND

A time division duplex (time division duplex, TDD) mode means that an uplink signal and a downlink signal are transmitted on a same spectrum in a time division manner. In other words, in an uplink slot, a terminal device sends a signal to a network device, and in a downlink slot, the network device sends a signal to the terminal device. In the TDD mode, uplink transmission and downlink transmission are performed in a time division manner, and communication cannot be performed simultaneously. Therefore, a transmission delay is long.

In the TDD mode, an uplink-downlink slot configuration of each operator is usually fixed, with a large ratio in the downlink and a small ratio in the uplink. As increasingly more scenarios require uplink services, problems such as uplink congestion and poor user experience occur in this slot configuration. In addition, when a system works in the uplink slot, a transmit channel resource of the network device is idle, and static power consumption is generated; or when the system works in the downlink slot, a receive channel resource of the network device is idle, and consequently a communication resource is wasted.

### SUMMARY

This application provides a communication method, apparatus, and system, to resolve the foregoing problem.

According to a first aspect, a communication method is provided. The method is applied to a TDD system, and the method includes: sending a first downlink signal to a terminal device through a downlink slot of a first band, and simultaneously, receiving a first uplink signal from the terminal device through an uplink slot of a second band, where there is an association relationship between an uplink-downlink slot configuration of the first band and an uplink-downlink slot configuration of the second band.

That there is the association relationship between the uplink-downlink slot configuration of the first band and the uplink-downlink slot configuration of the second band may be understood as that the uplink-downlink slot configuration of the other band may be obtained from the uplink-downlink slot configuration of one band. The association relationship may be a functional relationship. For example, it is assumed that the uplink-downlink slot configuration of the first band is A, and the uplink-downlink slot configuration of the second band is B. In this case, B = F(A).

It should be noted that a slot is a time domain resource, and TDD is a communication manner in which channel division is performed based on time. To be specific, a time domain resource is divided into periodic time periods (time frames), a time frame is further divided into smaller time periods (slots), and then a signal is received or sent in each time frame based on a specified slot according to a specific allocation principle.

It should be further noted that the communication method may also be applied to another system, for example, a frequency division duplex system. This is not limited in this application.

In the solution provided in this application, the network device may simultaneously receive and send signals through different bands. When sending a signal to the terminal device, the network device receives a feedback signal of the terminal device in real time, to reduce a TDD communication delay. In comparison with TDD mode communication, an equivalent bandwidth of an uplink service is increased, and an uplink rate is increased.

In a possible implementation, the network device transmits an uplink signal and a downlink signal in a time division manner. When uplink transmission is implemented, a transmit channel of the network device is idle. When downlink transmission is implemented, a receive channel of the network device is idle. Consequently, channel resources are wasted. However, in the solution provided in this application, in the downlink slot of the first band, the transmit channel of the network device is used to transmit a radio frequency signal of the first band, and simultaneously, in the uplink slot of the second band, the receive channel of the network device may be further used to receive a radio frequency signal of the second band, so that an idle channel resource is fully used, to improve overall power efficiency. That is, in the solution provided in this application, a plurality of bands may share a transmit channel resource and a receive channel resource of the network device. This not only improves resource utilization, but also reduces costs and power consumption of the network device.

In a possible implementation, the association relationship includes: The uplink-downlink slot configuration of the first band is opposite to the uplink-downlink slot configuration of the second band.

For example, the uplink-downlink slot configuration of the first band is A, and the uplink-downlink slot configuration of the second band is B = 1/A. If A is 3:7 (a time domain periodicity is 10 time frames, three time frames are allocated for uplink, and seven time frames are allocated for downlink), B is 7:3.

In a possible implementation, the method further includes: receiving a second uplink signal from the terminal device through an uplink slot of the first band, and simultaneously, sending a second downlink signal to the terminal device through a downlink slot of the second band.

In this implementation, in the uplink slot of the first band, the network device receives the radio frequency signal of the first band by using the receive channel, and simultaneously, in the downlink slot of the second band, the transmit channel of the network device may be further used to transmit the radio frequency signal of the second band, so that the idle transmit channel is fully used, to improve the overall power efficiency. In other words, a plurality of bands may share a transmit channel resource and a receive channel resource of the network device. This not only improves the resource utilization, but also reduces the costs and power consumption of the network device.

In a possible implementation, the terminal device includes a first terminal device and a second terminal device, and the sending a first downlink signal to a terminal device through a downlink slot of a first band, and simultaneously, receiving a first uplink signal from the terminal device through an uplink slot of a second band includes: sending the first downlink signal to the first terminal device through the downlink slot of the first band, and simultaneously, receiving the first uplink signal from the second terminal device through the uplink slot of the second band.

In a possible implementation, the uplink-downlink slot configuration includes an indication of an allocation ratio of uplink slots to downlink slots.

In a possible implementation, the method further includes: determining the uplink-downlink slot configuration in a preset manner.

With reference to the first aspect, in some implementations of the first aspect, the method further includes: determining the uplink-downlink slot configuration based on band information.

In a possible implementation, the first band includes one or more independent bands, and the second band includes one or more independent bands.

An operator has a large quantity of scattered spectrums. In this implementation, a plurality of scattered spectrums may be classified into the first spectrum or the second spectrum, so that scattered spectrum resources are fully used, and a signal transmission rate is increased.

In a possible implementation, the first band includes one or more sub-bands of a broadband, and the second band includes one or more sub-bands of a broadband.

In this implementation, a broadband resource may be divided into a plurality of sub-bands, to receive and transmit signals, so that the broadband resource is fully used, and is applicable to a plurality of communication scenarios.

According to a second aspect, a communication method is provided. The method is applied to a time division duplex TDD system, and the method includes: receiving a first downlink signal from a network device through a downlink slot of a first band, and simultaneously, sending a first uplink signal to the network device through an uplink slot of a second band.

In the solution provided in this application, the terminal device may simultaneously receive and send signals through different bands, to quickly receive a feedback signal from the network device, so as to reduce a communication delay. In this way, an equivalent bandwidth of an uplink service is increased, and an uplink rate is increased.

In a possible implementation, the association relationship includes: An uplink-downlink slot configuration of the first band is opposite to an uplink-downlink slot configuration of the second band.

In a possible implementation, the method further includes: sending a second downlink signal to the network device through an uplink slot of the first band, and simultaneously, receiving a second downlink signal from the network device through a downlink slot of the second band.

In a possible implementation, the uplink-downlink slot configuration includes an indication of an allocation ratio of uplink slots to downlink slots.

In a possible implementation, the first band includes one or more independent bands, and the second band includes one or more independent bands.

In a possible implementation, the first band includes one or more sub-bands of a broadband, and the second band includes one or more sub-bands of a broadband.

For beneficial effects of related implementations of the second aspect, refer to related descriptions of the first aspect. For brevity, details are not described herein again.

According to a third aspect, a network device is provided. The device is applied to a TDD system, and the device includes: a radio frequency processing unit, configured to: send a radio frequency signal of a first band to a terminal device in a downlink slot of the first band, and simultaneously, receive a radio frequency signal of a second band from the terminal device in an uplink slot of the second band; or configured to: receive a radio frequency signal of the first band from the terminal device in an uplink slot of the first band, and simultaneously, send a downlink signal of the second band to the terminal device in a downlink slot of the second band.

In the solution provided in this application, the first band and the second band share devices or modules of a receive channel and a transmit channel, to reduce device costs and device power consumption.

It should be understood that the first band or the second band may include one independent band, or may include a plurality of independent bands.

In this implementation, scattered bands may be fully used, to increase an uplink or downlink equivalent bandwidth, a band resource may be fully used, and a signal transmission rate can be increased.

Optionally, the first band or the second band includes a sub-band of a broadband.

Optionally, the first band or the second band includes a plurality of sub-bands of a broadband.

In a possible implementation, the radio frequency processing unit includes a switch, a first band filter, and a second band filter. The switch is configured to select the second band filter in the uplink slot of the second band; or is configured to select the first band filter in the uplink slot of the first band.

In this implementation, the receive channel of the network device uses the switch, the first band filter, and the second band filter to improve isolation between different bands, to reduce impact of transmission on performance of the receive channel.

In a possible implementation, the radio frequency processing unit further includes an interference cancellation module, and the interference cancellation module is configured to cancel an interference signal on the receive channel.

The interference cancellation module is used in this implementation, so that congestion and interference risks of the receive channel caused by a transmit signal is reduced.

In a possible implementation, the network device further includes a baseband processing unit, and the radio frequency processing unit further includes a radio on chip, a power amplifier, a circulator, a filter, an antenna, and a low noise amplifier. In the downlink slot of the first band, the baseband processing unit is configured to convert a baseband signal into a digital intermediate frequency signal, the radio on chip is configured to convert the baseband signal into the radio frequency signal of the first band, the power amplifier is configured to convert the radio frequency signal of the first band into a high-power radio frequency signal of the first band, the circulator is configured to unidirectionally transmit the radio frequency signal of the first band, the filter is configured to filter out a clutter of the radio frequency signal of the first band, and the antenna is configured to transmit the radio frequency signal of the first band. Simultaneously, in the uplink slot of the second band, the antenna is further configured to receive the radio frequency signal of the second band, the filter is further configured to filter out a clutter of the radio frequency signal of the second band, the circulator is further configured to unidirectionally transmit the radio frequency signal of the second band, the low noise amplifier is configured to amplify the radio frequency signal of the second band, the radio on chip is further configured to convert the radio frequency signal of the second band into an analog intermediate frequency signal, and the baseband processing unit is further configured to convert the analog intermediate frequency signal into a baseband signal.

It should be noted that the baseband processing unit or the radio frequency processing unit mentioned in embodiments of this application may be integrated into a same device, or may be an independent device.

It should be further noted that the components in the radio frequency processing unit may be integrated into a same device, or may be devices independent from each other.

According to a fourth aspect, a network device is provided. The network device includes: a transceiver unit and a processing unit. The transceiver unit is configured to: send a first downlink signal to a terminal device through a downlink slot of a first band, and simultaneously, receive a first uplink signal from the terminal device through an uplink slot of a second band, and there is an association relationship between an uplink-downlink slot configuration of the first band and an uplink-downlink slot configuration of the second band; and the processing unit is configured to: generate the first downlink signal and process the first uplink signal.

In a possible implementation, the transceiver unit is further configured to: receive a second uplink signal through an uplink slot of the first band, and send a second downlink signal through a downlink slot of the second band; and the processing unit is configured to: generate the second downlink signal and process the second uplink signal.

In a possible implementation, the association relationship includes: The uplink-downlink slot configuration of the first band is opposite to the uplink-downlink slot configuration of the second band.

In a possible implementation, the transceiver unit is further configured to: receive the second uplink signal from the terminal device through the uplink slot of the first band, and simultaneously, send the second downlink signal to the terminal device through the downlink slot of the second band; and the processing unit is configured to: generate the second downlink signal and process the second uplink signal.

In a possible implementation, the terminal device includes a first terminal device and a second terminal device. The transceiver unit is further configured to send the first downlink signal to the first terminal device through the downlink slot of the first band, and simultaneously, receive the first uplink signal from the second terminal device through the uplink slot of the second band.

In a possible implementation, the uplink-downlink slot configuration includes an indication of an allocation ratio of uplink slots to downlink slots.

In a possible implementation, the uplink-downlink slot configuration is determined in a preset manner.

In a possible implementation, the first band includes one or more independent bands, and the second band includes one or more independent bands.

In a possible implementation, the first band includes one or more sub-bands of a broadband, and the second band includes one or more sub-bands of a broadband.

According to a fifth aspect, a terminal device is provided. The device is applied to a TDD system, and the terminal device includes: a transceiver unit, configured to: receive a first downlink signal from a network device through a downlink slot of a first band, and simultaneously, send a first uplink signal to the network device through an uplink slot of a second band, where there is an association relationship between an uplink-downlink slot configuration of the first band and an uplink-downlink slot configuration of the second band; and a processing unit, configured to: generate the first uplink signal and process the first downlink signal.

In a possible implementation, the uplink-downlink slot configuration of the first band is opposite to the uplink-downlink slot configuration of the second band.

In a possible implementation, the transceiver unit is further configured to: send a second downlink signal to the network device through an uplink slot of the first band, and simultaneously, receive a second downlink signal from the network device through a downlink slot of the second band.

In a possible implementation, the uplink-downlink slot configuration includes an indication of an allocation ratio of uplink slots to downlink slots.

In a possible implementation, the first band includes one or more independent bands, and the second band includes one or more independent bands.

In a possible implementation, the first band includes one or more sub-bands of a broadband, and the second band includes one or more sub-bands of a broadband.

According to a sixth aspect, a communication apparatus is provided, and the apparatus includes: a processor. The processor is coupled to a memory, the memory is configured to store a program or instructions, and when the program or the instructions are executed by the processor, the apparatus is enabled to perform the method in any one of the first aspect or the possible implementations of the first aspect, or a computer is enabled to perform the method in any one of the second aspect or the possible implementations of the second aspect.

According to a seventh aspect, a readable storage medium is provided, and the readable storage medium stores a computer program or instructions. When the computer program or the instructions are executed, a computer is enabled to perform the method in any one of the first aspect or the possible implementations of the first aspect, or the computer is enabled to perform the method in any one of the second aspect or the possible implementations of the second aspect.

According to an eighth aspect, a computer program product including instructions is provided. When the computer program product runs on a computer, the computer is enabled to perform the method in any one of the first aspect or the possible implementations of the first aspect, or the computer is enabled to perform the method in any one of the second aspect or the possible implementations of the second aspect.

According to a ninth aspect, a communication system is provided, and the communication system includes the communication apparatus.

Based on the foregoing description, in the solution provided in this application, the network device may simultaneously receive and transmit signals based on an association relationship between uplink-downlink slot configurations of different bands. For example, the association relationship is an opposite relationship. In the solution in this application, a communication delay is reduced, slots and an equivalent bandwidth of an uplink service are increased, an uplink transmission rate is increased, and an idle channel resource may be further fully used. In addition, the network device provided in this application is used, so that a plurality of bands share a device of a receive and transmit channel, to reduce device costs and device power consumption.

### BRIEF DESCRIPTION OF DRAWINGS

FIG. 1 is a schematic diagram of a system according to an embodiment of this application;
FIG. 2 is a schematic flowchart of a communication method according to an embodiment of this application;
FIG. 3 is a schematic diagram of a slot configuration according to an embodiment of this application;
FIG. 4 is a schematic diagram of a spectrum scenario applicable to a communication method according to an embodiment of this application;
FIG. 5 is a schematic flowchart of a communication method according to an embodiment of this application;
FIG. 6 is a schematic diagram of a network device according to an embodiment of this application;
FIG. 7 is a schematic flowchart of a specific example of a communication method according to an embodiment of this application;
FIG. 8 is a schematic diagram of another network device according to an embodiment of this application;
FIG. 9 is a schematic diagram of still another network device according to an embodiment of this application;
FIG. 10 is a schematic diagram of yet another network device according to an embodiment of this application;
FIG. 11 is a schematic block diagram of a communication apparatus according to an embodiment of this application; and
FIG. 12 is a schematic block diagram of a communication device according to an embodiment of this application.

### DESCRIPTION OF EMBODIMENTS

The following describes technical solutions of this application with reference to accompanying drawings.

Time division duplex (time division duplex, TDD) means that an uplink signal and a downlink signal are transmitted on a same band in a time division manner. In an uplink slot, a terminal device sends a signal to a network device, and in a downlink slot, the network device sends a signal to the terminal device. In the TDD mode, the uplink signal and the downlink signal cannot be transmitted simultaneously. Therefore, a delay is long. In addition, an uplink-downlink slot configuration of an operator is fixed currently, for example, 8:2 (a periodicity is 10 subframes, eight subframes are allocated to the uplink, and two subframes are allocated to the downlink). Generally, a downlink slot ratio is large and an uplink slot ratio is small. Therefore, an uplink equivalent bandwidth is narrow and an uplink rate is low. As a requirement for the uplink rate gradually increases, problems such as uplink channel congestion and poor user experience may occur in this configuration. This application provides a communication method, to implement that an uplink signal and a downlink signal are transmitted simultaneously in a TDD mode, so as to reduce a delay and improve user experience.

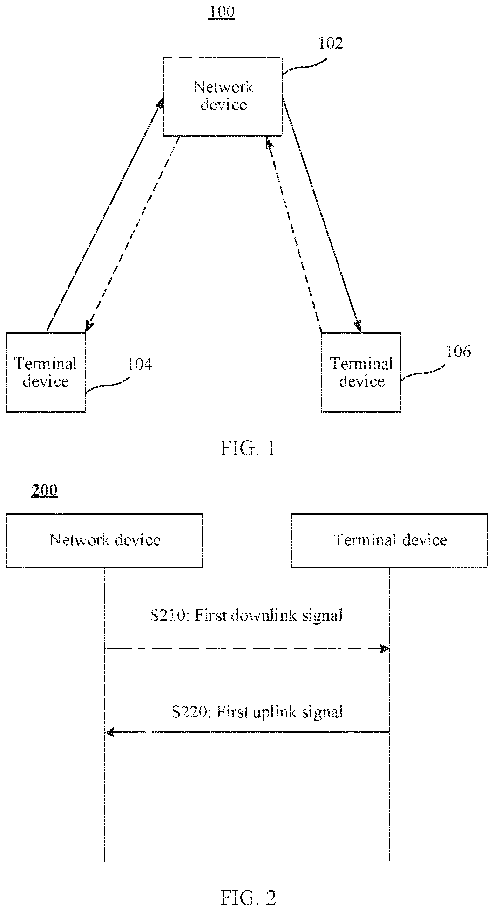

FIG. 1 is a schematic diagram of a system to which an embodiment of this application is applied. As shown in FIG. 1, a system 100 may include a network device 102 and terminal devices 104 and 106. The network device is wirelessly connected to the terminal devices. It should be understood that FIG. 1 shows an example in which the system includes only one network device for description. However, embodiments of the present invention are not limited thereto. For example, the system may alternatively include more network devices. Similarly, the system may alternatively include more terminal devices. It should be further understood that the system may also be referred to as a network. This is not limited in embodiments of the present invention.

The terminal device in embodiments of the present invention may alternatively be user equipment (user equipment, LTE), an access terminal, a subscriber unit, a subscriber station, a mobile station, a mobile console, a remote station, a remote terminal, a mobile device, a user terminal, a terminal, a wireless communication device, a user agent, a user apparatus, or the like. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, or a terminal device in a future evolved public land mobile network (public land mobile network, PLMN).

By way of example but not limitation, in embodiments of the present invention, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands, or smart jewelry for monitoring physical signs.

The network device in embodiments of the present invention may be a device configured to communicate with the terminal device. The network device may be a base transceiver station (base transceiver station, BTS) in global mobile communication (global system of mobile communication, GSM) or code division multiple access (code division multiple access, CDMA), or may be a NodeB (NodeB, NB) in a wideband code division multiple access (wideband code division multiple access, WCDMA) system, or may be an evolved NodeB (Evolved NodeB, eNB or eNodeB) in a Long Term Evolution (Long Term Evolution, LTE) system, or may be a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like.

In addition, in embodiments of the present invention, the network device provides a service for a cell, and the terminal device communicates with the network device by using a transmission resource (for example, a frequency domain resource, namely, a spectrum resource) used in the cell. The cell may be a cell corresponding to the network device (for example, a base station). The cell may belong to a macro base station or may belong to a base station corresponding to a small cell (small cell). The small cell herein may include a metro cell (metro cell), a micro cell (micro cell), a pico cell (pico cell), a femto cell (femto cell), and the like. These cells are characterized by a small coverage area, low transmit power, and the like, and are suitable for providing a high-rate data transmission service. In addition, the cell may be a hypercell (hypercell).

FIG. 2 is a schematic flowchart of the communication method 200 according to this application. The method 200 may be applied to a TDD system, or may be applied to another system. This is not limited in this application.

S210: A network device sends a first downlink signal to a terminal device through a downlink slot of a first band, and simultaneously, performs S220.

It should be noted that "simultaneously" means a same time domain resource, for example, may be a same slot, or may be a same symbol. This is not limited in this application.

S220: The network device receives a first uplink signal from the terminal device through an uplink slot of a second band, where there is an association relationship between an uplink-downlink slot configuration of the first band and an uplink-downlink slot configuration of the second band.

It should be noted that, in this embodiment of this application, the downlink signal and the uplink signal are used for communication between the network device and the terminal device. The signal may be a data packet, or may be a transmission instruction, for example, a DCI instruction. This is not limited in this application.

In this embodiment of this application, the uplink-downlink slot configuration includes an indication of an allocation ratio of uplink slots to downlink slots, or a configuration relationship between uplink subframes and downlink subframes.

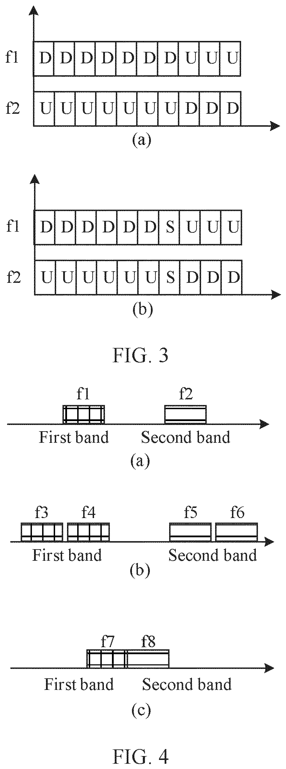

In an optional implementation, the slot configuration includes a configuration of uplink subframes and downlink subframes. For example, as shown in (a) in FIG. 3, D is a downlink subframe, U is an uplink subframe, a time domain periodicity of a first band f1 is 10 subframes, three uplink subframes are allocated, and seven downlink subframes are allocated. In this case, an uplink-downlink slot configuration of the first band is 3:7.

In an optional implementation, the slot configuration may further include a first subframe, and the first subframe is a subframe for communication between the terminal device and the network device.

For example, the first subframe is a special subframe S. As shown in (b) in FIG. 3, D is a downlink subframe, U is an uplink subframe, a time domain periodicity of a first band f1 is 10 subframes, three uplink subframes are allocated, six downlink subframes are allocated, and one special subframe S is allocated.

In this embodiment of this application, that there is the association relationship between the slot ratio of the first band and the slot ratio of the second band indicates that the slot ratio of the other band may be deduced from the slot ratio of one band.

Optionally, the association relationship between slot ratios of the two bands may be predefined or preconfigured.

In a possible implementation, if the slot configuration includes the uplink-downlink slot configuration, that there is the association relationship between the uplink-downlink slot configuration of the first band and the uplink-downlink slot configuration of the second band indicates that the uplink-downlink slot configuration of the other band may be deduced from the uplink-downlink slot configuration of one band. It is assumed that the uplink-downlink slot configuration of the first band is A, and the uplink-downlink slot configuration of the second band is B. In this case, B = F(A). For example, the association relationship includes that the uplink-downlink slot configuration of the first band is opposite to the uplink-downlink slot configuration of the second band, namely, B = 1/A. For example, as shown in (a) in FIG. 3, if A is 3:7, B is 7:3.

In another possible implementation, the slot configuration further includes a slot configuration of the special subframe. For the configuration of the special subframe, as shown in (b) in FIG. 3, when a subframe configuration of the first band is S, correspondingly, the subframe configuration of the second band is also S. In a time period in which the special subframe S of the first band f1 transmits the uplink signal, the special subframe S of the second band f2 transmits the downlink signal; and in a time period in which the special subframe S of the first band f1 transmits the downlink signal, the special subframe S of the second band f2 transmits the uplink signal.

It should be noted that the time domain periodicity may be 10 subframes or another time unit, for example, a frame or a slot, or may be another quantity of time units, for example, if the time domain periodicity is five subframes, and A is 2:3 (the time domain periodicity is five subframes, two subframes are allocated for the uplink, and three subframes are allocated for the downlink), the uplink-downlink slot ratio of the second band is 3:2. This is not limited in this application.

In this embodiment of this application, the network device may determine the slot ratio in a preset manner. For example, the network device first determines the slot configuration of the first band based on the predefined or preconfigured slot configuration, and then sets the uplink-downlink slot configuration of the second band based on the association relationship between the slot configurations of the two bands. The network device sends and receives signals based on the slot configuration. Optionally, the network device may flexibly configure or dynamically adjust the slot ratio based on an actual demand.

In an optional implementation, the network device may determine the uplink-downlink slot configuration based on band information, and the band information includes information such as a band width and a quantity of sub-bands of the band. For example, when a width of the first band is greater than a width of the second band, and a service demand for downlink transmission is large, the network device sets a downlink slot ratio of the first band to be greater than an uplink slot ratio of the first band.

In this embodiment of this application, the first band may include one or more independent bands, and the second band may also include one or more independent bands.

For example, the first band includes 2.3 GHz, the second band includes 2.6 GHz, and both the two bands are independent bands.

For example, as shown in (a) in FIG. 4, both a band f1 and a band f2 are independent bands, the first band is f1, and the second band is f2.

For another example, as shown in (b) in FIG. 4, a band f3, a band f4, a band f5, and a band f6 each are an independent band. The first band includes the band f3 and the band f4, the second band includes the band f5 and the band f6, an uplink-downlink slot configuration of the band f3 and an uplink-downlink slot configuration of the band f4 are the same, and an uplink-downlink slot configuration of the band f5 and an uplink-downlink slot configuration of the band f6 are the same.

In another optional implementation, the first band includes a sub-band of a broadband, and the second band also includes a sub-band of a broadband. For example, as shown in (c) in FIG. 4, a broadband is divided into a sub-band f7 and a sub-band f8, the first band includes the sub-band f7, and the second band includes the sub-band f8.

In a possible implementation, for a broadband, the band is divided into two or more sub-bands, and the sub-bands are classified into the first band or the second band. Uplink-downlink slot configurations of sub-bands in the first band are the same, uplink-downlink slot configurations of sub-bands in the second band are the same, and there is an association relationship between an uplink-downlink slot configuration of a sub-band included in the first band and an uplink-downlink slot configuration of a sub-band included in the second band.

In this implementation, a plurality of independent bands or a plurality of sub-bands may share a set of network device, to reduce device costs and power consumption.

In an optional implementation, the network device sends a second downlink signal to the terminal device through a downlink slot of the second band, and simultaneously, the network device receives a second uplink signal from the terminal device through the uplink slot of the first band. There is the association relationship between the uplink-downlink slot configuration of the first band and the uplink-downlink slot configuration of the second band.

In this implementation, transmit and receive channels of the network device can be fully used, to save channel resources, and signals can be simultaneously transmitted in the uplink and the downlink, so that a feedback signal from a peer end can be quickly received, to reduce a delay. In addition, in this implementation, in comparison with an existing TDD mode, an equivalent bandwidth of the uplink channel is increased, and the uplink rate is increased.

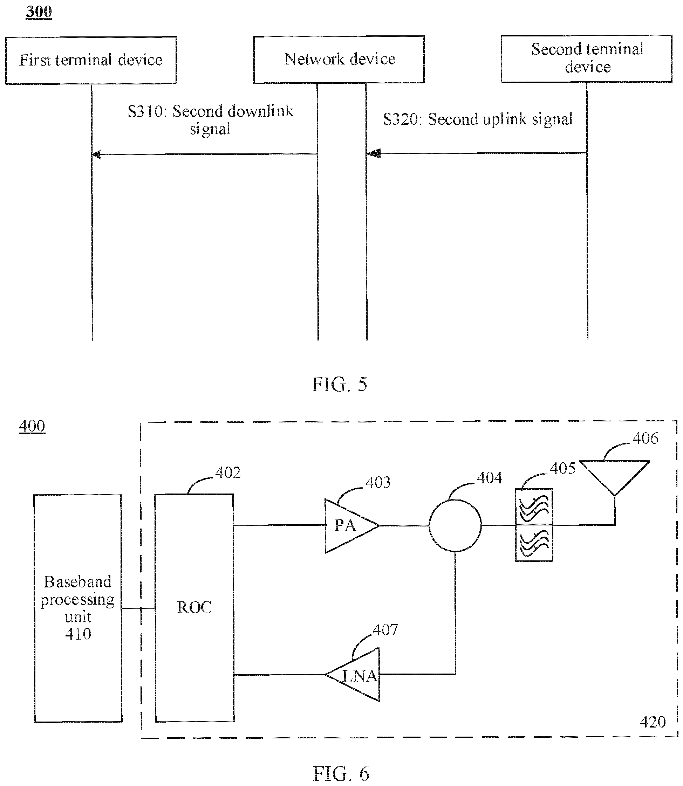

The terminal device in the method 200 may include different terminal devices. FIG. 5 is a schematic flowchart of a communication method 300 according to this application. One network device and two terminal devices are used as an example to describe the communication method. The method 300 may be applied to a TDD system, or may be applied to another system. This is not limited in this application.

S3 10: The network device sends a first downlink signal to a first terminal device through a downlink slot of a first band, and simultaneously, performs S320, where there is an association relationship between an uplink-downlink slot configuration of the first band and an uplink-downlink slot configuration of a second band.

S320: The network device receives a first uplink signal from a second terminal device through an uplink slot of the second band.

In an optional implementation, the network device sends a second downlink signal to the second terminal device through a downlink slot of the second band, and simultaneously, the network device receives a second uplink signal from the first terminal device through an uplink slot of the first band. There is the association relationship between the uplink-downlink slot configuration of the first band and the uplink-downlink slot configuration of the second band.

It should be noted that, in the method 300, except that a quantity of terminal devices in a communication scenario is different, for another implementation, refer to the method 200. For brevity, details are not described herein again.

In this implementation, transmit and receive channels of the network device can also be fully used, to save channel resources.

FIG. 6 is a schematic block diagram of a network device according to this application. Specifically, the network device may be any network device in this application, and the any network device may implement a function that can be implemented by the network device. The network device in this embodiment of this application may be a physical device, or may be a component of the physical device, or may be a function module in the physical device. As shown in FIG. 6, the network device 400 includes a baseband processing unit 410 and a radio frequency processing unit 420, and is applied to a TDD communication system. The radio frequency processing unit 420 includes a radio on chip (radio on chip, ROC) 402, a power amplifier (power amplifier, PA) 403, a circulator 404, a filter 405, an antenna 406, and a low noise amplifier (low noise amplifier, LNA) 407. A connection relationship between all modules or components is shown in FIG. 6. In an implementation, the network device 400 may implement the function of the network device in this application. The following describes all modules or components.

The baseband processing unit 410 is configured to convert a baseband signal into a digital intermediate frequency signal. Optionally, the baseband processing unit is a digital intermediate frequency (digital intermediate frequency, DIF) module.

The ROC 402 is configured to: convert the digital intermediate frequency signal into an analog intermediate frequency signal, and convert the analog intermediate frequency signal into a radio frequency signal.

The PA 403 is configured to convert the radio frequency signal into a high-power radio frequency signal. Optionally, the PA may be a broadband PA or a multi-frequency PA.

The circulator 404 is configured to unidirectionally transmit the radio frequency signal.

The filter 405 is configured to filter out a clutter of the radio frequency signal. The filter may simultaneously filter out clutters of signals on at least two bands, and may alternatively be referred to as a multiplexer.

The antenna 406 is configured to transmit the radio frequency signal, and is further configured to receive the radio frequency signal. Optionally, the antenna is a broadband antenna.

The LNA407 is configured to amplify the radio frequency signal. Optionally, the LNA is a broadband LNA.

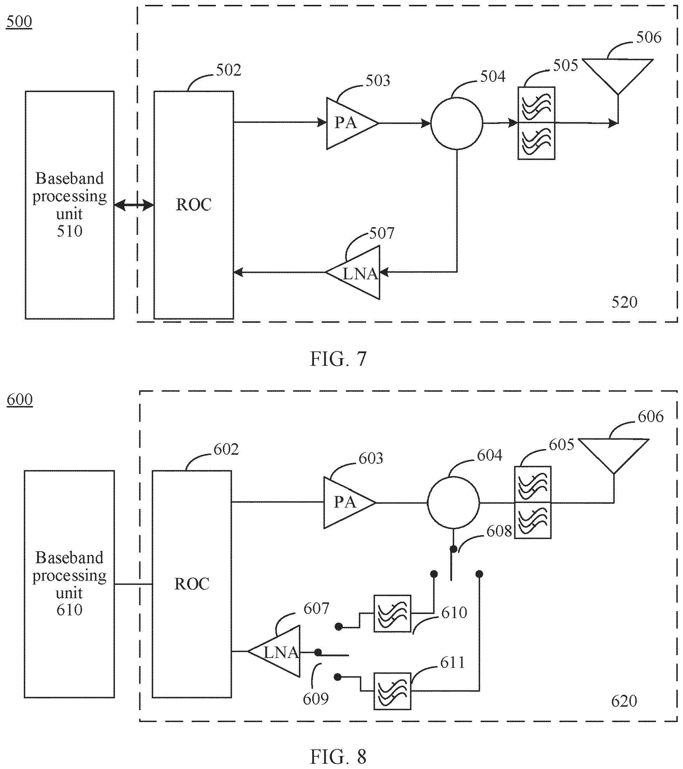

For ease of understanding the communication method 200 and the communication method 300 provided in this embodiment, this method is described in detail with reference to the network device 400 provided in this application. In the following, an example in which the network device is a base station and the terminal device is UE is used to describe an embodiment of this application with reference to FIG. 7.

When the system works in a downlink slot of a first band, the base station sends a signal to the UE by using the first band. A specific implementation is as follows:

After the baseband signal is processed by the baseband processing unit 510 module, the digital intermediate frequency signal is output.

The digital intermediate frequency signal passes through a digital-to-analog converter (digital-to-analog converter, DAC) in the ROC 502, to convert the digital intermediate frequency signal into the analog intermediate frequency signal, and passes through a frequency mixer in the ROC, to convert a frequency of the analog intermediate frequency signal into a radio frequency a first band, so as to output a radio frequency signal of the first band.

Optionally, the digital intermediate frequency signal passes through a radio frequency digital-to-analog converter (radio frequency digital-to-analog, RFDAC) in the ROC 502, to directly convert a frequency of the digital intermediate frequency signal into a radio frequency of a first band, so as to output a radio frequency signal of the first band.

The PA 503 amplifies the radio frequency signal of the first band, to output a high-power radio frequency signal of the first band.

Optionally, the power amplifier is a broadband PA or a multi-frequency PA.

The high-power radio frequency signal of the first band arrives at a multiplexer 505 after passing through the circulator 504.

After the high-power radio frequency signal of the first band is filtered out by the multiplexer 505, the high-power radio frequency signal of the first band is transmitted to the antenna.

Optionally, the antenna is a broadband antenna. The antenna transmits the radio frequency signal of the first band to free space, and transmits to the UE.

In an optional implementation, when the base station sends a signal to the UE by using the first band, the UE sends a signal to the base station by using the second band. Optionally, the base station receives a radio frequency signal of a second band sent by the UE.

In this implementation, slots and an equivalent bandwidth of an uplink service are increased, and an uplink rate is increased.

The UE sends a signal to the base station through an uplink slot of the second band of the system. A specific implementation is as follows:

The radio frequency signal of the second band transmitted by the UE is transmitted to an antenna 506 of the base station through the free space.

Optionally, the antenna 506 is a broadband antenna.

The radio frequency signal of the second band passes through the multiplexer 505, to filter out external interference.

The radio frequency signal of the second band of which interference is filtered out is transmitted to an LNA 507 through the circulator 504.

In the radio frequency signal of the second band, a weak radio frequency signal is amplified by using the LNA 507.

Optionally, the LNA 507 is a broadband LNA.

An amplified radio frequency signal of the second band passes through the frequency mixer in the ROC, to convert a frequency of the radio frequency signal into an intermediate frequency, that is, the radio frequency signal is converted into an analog intermediate frequency signal; and then, passes through an analog-to-digital converter (analog-to-digital, ADC) in the ROC, to convert the analog intermediate frequency signal into a digital intermediate frequency signal.

Optionally, an amplified radio frequency signal of the second band passes through a radio frequency analog-to-digital converter (radio frequency analog-to-digital, RFDAC) in the ROC, to directly convert the radio frequency signal of the second band into a digital intermediate frequency signal.

The digital intermediate frequency signal is input to the baseband processing unit, and is converted into a baseband signal for processing.

According to this embodiment of this application, the network device may simultaneously process signals on at least two independent bands or two sub-bands, to implement that the uplink signal is received and simultaneously the downlink signal is sent in the method 200 or 300 in this embodiment of this application, reduce a communication delay, maintain uplink and downlink reciprocity between the first band and the second band, and fully use an idle transmit channel and receive channel, so as to improve overall power efficiency.

In comparison with a fact that in conventional TDD, different bands need to complete communication by using different devices, the network device provided in this application enables bands to share a module in the network device, to reduce device costs and device power consumption.

FIG. 8 is a schematic block diagram of another network device according to an embodiment of this application. As shown in FIG. 8, in addition to all modules in the radio frequency processing unit 420, a radio frequency processing unit 620 of a network device 600 further includes a switch 608, a switch 609, a first band filter 610, and a second band filter 611. A connection relationship thereof is shown in FIG. 8.

Optionally, the switch 608 and the switch 609 each may be a single-pole multi-throw switch.

The single-pole multi-throw switch 608 and the single-pole multi-throw switch 609 are configured to select filters. In an optional implementation, the single-pole multi-throw switch 608 and the single-pole multi-throw switch 609 select the first band filter 610 or the second band filter 611.

In this embodiment of this application, UE sends a radio frequency signal to a base station by using a second band. After an antenna 606 of the base station receives the radio frequency signal of the second band, the signal is filtered by a multiplexer 605 and transmitted to the switch 608 by using a circulator 604. The second band filter 611 is selected by the switch 608 and switch 609, and the signal is transmitted to an LNA 607, an ROC 602, and the baseband processing unit 610 for related processing. For the related processing, refer to an operation manner of the network device 500, and details are not described herein again.

In this manner, isolation between a transmit channel and a receive channel can be improved, and impact of the transmit channel on performance of the receive channel can be reduced.

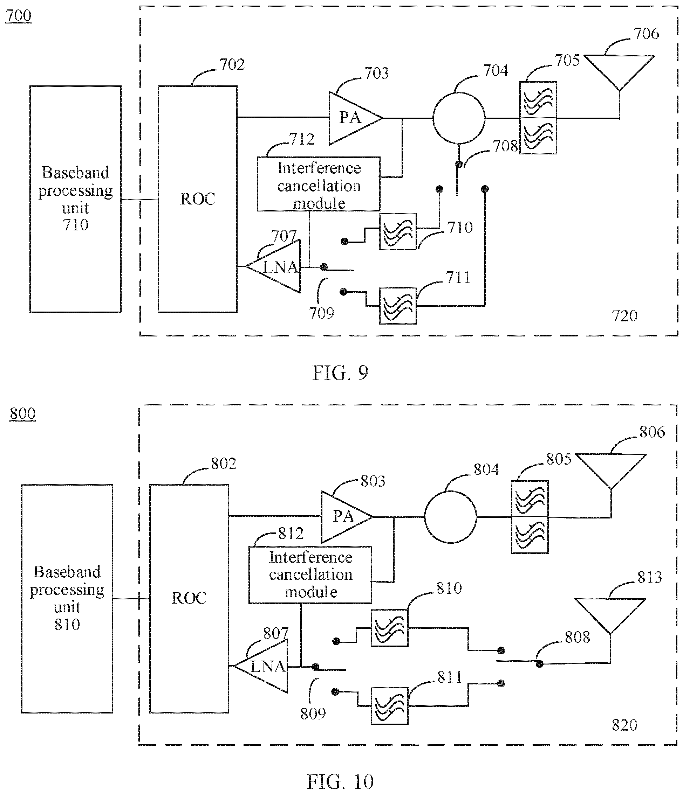

FIG. 9 is a schematic block diagram of still another network device according to an embodiment of this application. As shown in FIG. 9, in addition to all modules in the radio frequency processing unit 620, a radio frequency processing unit 720 of a network device 700 further includes an interference cancellation module 712.

In this embodiment of this application, a connection manner of the interference cancellation module is shown in FIG. 9. One end is connected to a transmit channel, and the other end is connected to a receive channel. For example, one end is connected after a PA 703 on the transmit channel, and the other end is connected before an LNA on the receive channel. Optionally, the interference cancellation module may be alternatively connected in another manner. This is not limited in this application, provided that one end is connected to the transmit channel and the other end is connected to the receive channel.

In this embodiment of this application, the interference cancellation module 712 may generate a cancellation signal of which amplitude is the same as an amplitude of an interference signal on the receive channel and of which phase is opposite to the phase of the interference signal on the receive channel, to resolve congestion and interference problems of the receive channel caused by a transmit channel signal. For ease of understanding a function of the interference cancellation module, the following uses an example for description.

For example, in a signal sending process, when a transmit signal passes through a circulator, a small part of the transmit signal is coupled to the receive channel. When the transmit signal is input to a multiplexer, a small part of the transmit signal is reflected to the circulator and then enters the receive channel. The small part of the transmit signal may cause congestion of the receive channel, so that the small part of the transmit signal is an interference signal. In an optional manner, after a radio frequency signal passes through a PA, a part of the radio frequency signal passes through the interference cancellation module. The interference cancellation module is configured to adjust each of the part of the radio frequency signal to a cancellation signal that has a same amplitude as and a reverse phase from an interference signal that is reflected by a circulator and/or a multiplexer and enters the receive channel. After the interference signal and the cancellation signal cancel each other, congestion and interference problems of the receive channel are resolved.

FIG. 10 is a schematic block diagram of yet another network device 800 according to an embodiment of this application. As shown in FIG. 10, a radio frequency processing unit 820 of the network device 800 includes all modules in the radio frequency processing unit 720, and the antenna 606 is divided into a transmit antenna 806 and a receive antenna 813.

Optionally, both the transmit antenna 806 and the receive antenna 813 are broadband antennas.

In an optional implementation, the transmit antenna 806 and the receive antenna 813 are integrated into a same device.

In another optional implementation, the transmit antenna 806 and the receive antenna 813 do not belong to a same device.

In this embodiment of this application, a base station sends a radio frequency signal to UE by using the transmit antenna 806, and simultaneously, receives, by using the receive antenna 813, the radio frequency signal sent by the UE.

Optionally, the transmit antenna 806 is configured to send the radio frequency signal to a first LTE, and simultaneously, the receive antenna 813 is configured to receive the radio frequency signal sent by a second LTE.

It should be understood that the "first" and "second" do not constitute a limitation on a terminal device, and are merely intended to distinguish between different terminal devices.

The network device is used, so that the receive antenna and the transmit antenna are separated, to improve isolation between transmit and receive, so as to reduce impact on performance between a transmit channel and a receive channel.

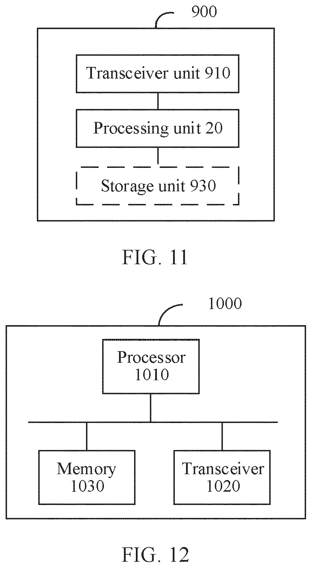

FIG. 11 is a schematic block diagram of a communication apparatus 900 according to an embodiment of this application. As shown in the figure, the apparatus 900 may include a transceiver unit 910 and a processing unit 920.

In a possible design, the apparatus 900 may be the network device in the method embodiments, or may be configured to implement the terminal device in the method embodiments.

It should be understood that the communication apparatus 900 may correspond to the network device in the method 200 or 300 according to embodiments of this application, and the communication apparatus 900 may include units configured to perform the methods performed by the network device in the method 200 in FIG. 2 and the method 300 in FIG. 5. In addition, units in the apparatus 900 and the foregoing other operations and/or functions are respectively intended to implement corresponding procedures of the method 200 in FIG. 2 and the method 300 in FIG. 5. It should be understood that a specific process in which the units perform the foregoing corresponding steps is described in detail in the foregoing method embodiments, and for brevity, details are not described herein.

In a possible design, the apparatus 900 may be the network device in the method embodiments, or may be a chip configured to implement a function of the network device in the method embodiments.

It should be understood that the apparatus 900 may correspond to units configured to perform the methods performed by the terminal device in the method 200 in this application and the method 300 in FIG. 5. In addition, the units in the apparatus 900 and the foregoing other operations and/or functions are respectively intended to implement corresponding procedures of the method 200 in FIG. 2 and the method 300 in FIG. 5. It should be understood that a specific process in which the units perform the foregoing corresponding steps is described in detail in the foregoing method embodiments, and for brevity, details are not described herein.

In a possible design, the apparatus 900 may be the terminal device in the method embodiments, or may be a chip configured to implement a function of the terminal device in the method embodiments.

It should be further understood that, the transceiver unit 910 in the apparatus 900 may correspond to a transceiver 1020 in a device 1000 shown in FIG. 12, and the processing unit 920 in the apparatus 900 may correspond to a processor 1010 in the device 1000 shown in FIG. 12.

It should be further understood that when the communication apparatus 900 is the chip, the chip includes the transceiver unit and the processing unit. The transceiver unit may be an input/output circuit or a communication interface. The processing unit may be a processor, a microprocessor, or an integrated circuit that is integrated on the chip.

The transceiver unit 910 is configured to implement a signal receiving/sending operation of the apparatus 900, and the processing unit 920 is configured to implement a signal processing operation of the communication apparatus 900.

Optionally, the communication apparatus 900 further includes a storage unit 930, and the storage unit 930 is configured to store instructions.

FIG. 12 shows a communication device 1000 according to an embodiment of this application. As shown in the figure, the device 1000 includes at least one processor 1010 and a transceiver 1020. The processor 1010 is coupled to a memory, and is configured to execute instructions stored in the memory, to control the transceiver 1020 to send a signal and/or receive a signal. Optionally, the device 1000 further includes a memory 1030, configured to store instructions.

It should be understood that the processor 1010 and the memory 1030 may be combined into one processing apparatus. The processor 1010 is configured to execute program code stored in the memory 1030, to implement the foregoing functions. During specific implementation, the memory 1030 may alternatively be integrated into the processor 1010, or may be independent of the processor 1010.

It should be further understood that the transceiver 1020 may include a receiver (or referred to as a receive machine) and a transmitter (or referred to as a transmit machine). The transceiver 1020 may further include an antenna. A quantity of the antenna may be one or more. The transceiver 1020 may be a communication interface or an interface circuit.

When the device 1000 is a chip, the chip includes a transceiver unit and a processing unit. The transceiver unit may be an input/output circuit or a communication interface. The processing unit may be a processor, a microprocessor, or an integrated circuit that is integrated on the chip.

An embodiment of this application further provides a processing apparatus, including a processor and an interface. The processor may be configured to perform the method in the foregoing method embodiments.

It should be understood that the processing apparatus may be a chip. For example, the processing apparatus may be a field programmable gate array (field programmable gate array, FPGA), an application-specific integrated chip (application-specific integrated chip, ASIC), a system on chip (system on chip, SoC), a central processing unit (central processing unit, CPU), a network processor (network processor, NP), a digital signal processor (digital signal processor, DSP) circuit, a micro controller unit (micro controller unit, MCU), a programmable logic device (programmable logic device, PLD), or another integrated chip.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

An embodiment of this application further provides a computer-readable storage medium. The computer-readable storage medium stores computer instructions used to implement the method performed by the network device in the foregoing method embodiments.

An embodiment of this application further provides a computer-readable storage medium. The computer-readable storage medium stores computer instructions used to implement the method performed by the terminal device in the foregoing method embodiments.

An embodiment of this application further provides a computer program product including instructions. When the instructions are executed by a computer, the computer is enabled to implement the method performed by the network device or the method performed by the terminal device in the foregoing method embodiments.

It may be clearly understood by a person skilled in the art that, for convenience and brief description, for explanations and beneficial effects of related content in any communication apparatus provided above, refer to the corresponding method embodiment provided above. Details are not described herein again.

A specific structure of an execution body of the method provided in embodiments of this application is not specifically limited in embodiments of this application, provided that a program that records code for the method provided in embodiments of this application can be run to perform communication according to the method provided in embodiments of this application. For example, the method provided in embodiments of this application may be performed by a terminal device, a network device, or a function module that is in a terminal device or a network device and that can invoke and execute the program.

Aspects or features of this application may be implemented as a method, an apparatus, or a product that uses standard programming and/or engineering technologies. The term "product" used in this specification may cover a computer program that can be accessed from any computer-readable component, carrier, or medium.

The computer-readable storage medium may be any usable medium accessible by a computer, or a data storage device, such as a server or a data center, integrating one or more usable media. The usable medium (or the computer-readable medium) may include, for example, but is not limited to, various media that can store program code such as a magnetic medium or a magnetic storage device (for example, a floppy disk, a hard disk (for example, a removable hard disk), or a magnetic tape), an optical medium (for example, an optical disc, a compact disc (compact disc, CD), or a digital versatile disc (digital versatile disc, DVD)), a smart card, and a flash memory device (for example, an erasable programmable read-only memory (erasable programmable read-only memory, EPROM), a card, a stick, or a key drive), or a semiconductor medium (for example, a solid state disk (solid state disk, SSD), a USB flash drive, a read-only memory (read-only memory, ROM), or a random access memory (random access memory, RAM)).

Various storage media described in this specification may indicate one or more devices and/or other machine-readable media that are configured to store information. The term "machine-readable media" may include but are not limited to a radio channel and various other media that can store, include, and/or carry instructions and/or data.

It may be understood that the memory mentioned in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. As an example instead of a limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (storage module) may be integrated into the processor.

It should further be noted that the memory described in this specification aims to include but is not limited to these memories and any memory of another proper type.

In the several embodiments provided in this application, it should be understood that the disclosed apparatus and method may be implemented in other manners. For example, the foregoing apparatus embodiments are only examples. For example, division into the foregoing units is only logical function division, and may be another division manner during actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electronic form, a mechanical form, or another form.

The foregoing units described as separate parts may or may not be physically separate, and parts displayed as units may or may not be physical units, may be located in one position, or may be distributed on a plurality of network units. Some or all of the units may be selected based on actual requirements to implement the solutions provided in this application.

In addition, function units in embodiments of this application may be integrated into one unit, or each of the units may exist alone physically, or two or more units are integrated into one unit.

All or some of the foregoing embodiments may be implemented by using software, hardware, firmware, or any combination thereof.

When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions. The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a time division duplex TDD system, and comprising:
sending a first downlink signal to a terminal device through a downlink slot of a first band, and simultaneously, receiving a first uplink signal from the terminal device through an uplink slot of a second band, wherein
there is an association relationship between an uplink-downlink slot configuration of the first band and an uplink-downlink slot configuration of the second band.

2. The method according to claim 1, wherein the association relationship comprises:
the uplink-downlink slot configuration of the first band is opposite to the uplink-downlink slot configuration of the second band.

3. The method according to claim 2, wherein the method further comprises:
receiving a second uplink signal from the terminal device through an uplink slot of the first band, and simultaneously, sending a second downlink signal to the terminal device through a downlink slot of the second band.

4. The method according to any one of claims 1 to 3, wherein the terminal device comprises a first terminal device and a second terminal device, and the sending a first downlink signal to a terminal device through a downlink slot of a first band, and simultaneously, receiving a first uplink signal from the terminal device through an uplink slot of a second band comprises:
sending the first downlink signal to the first terminal device through the downlink slot of the first band, and simultaneously, receiving the first uplink signal from the second terminal device through the uplink slot of the second band.

5. The method according to claim 4, wherein the uplink-downlink slot configuration comprises an indication of an allocation ratio of uplink slots to downlink slots.

6. The method according to claim 5, wherein the method further comprises: determining the uplink-downlink slot configuration in a preset manner.

7. The method according to claim 5, wherein the method further comprises: determining the uplink-downlink slot configuration based on band information.

8. The method according to claim 7, wherein the first band comprises one or more independent bands, and the second band comprises one or more independent bands.

9. The method according to claim 7, wherein the first band comprises one or more sub-bands of a broadband, and the second band comprises one or more sub-bands of a broadband.

10. A communication method, applied to a time division duplex TDD system, and comprising:
receiving a first downlink signal from a network device through a downlink slot of a first band, and simultaneously, sending a first uplink signal to the network device through an uplink slot of a second band, wherein
there is an association relationship between an uplink-downlink slot configuration of the first band and an uplink-downlink slot configuration of the second band.

11. The method according to claim 10, wherein the association relationship comprises:
the uplink-downlink slot configuration of the first band is opposite to the uplink-downlink slot configuration of the second band.

12. The method according to claim 11, wherein the method further comprises:
sending a second downlink signal to the network device through an uplink slot of the first band, and simultaneously, receiving a second downlink signal from the network device through a downlink slot of the second band.

13. The method according to any one of claims 10 to 12, wherein the uplink-downlink slot configuration comprises an indication of an allocation ratio of uplink slots to downlink slots.

14. The method according to claim 13, wherein the first band comprises one or more independent bands, and the second band comprises one or more independent bands.

15. The method according to claim 13, wherein the first band comprises one or more sub-bands of a broadband, and the second band comprises one or more sub-bands of a broadband.

16. A network device, applied to a TDD system, wherein the network device comprises:
a radio frequency processing unit, configured to: send a radio frequency signal of a first band to a terminal device in a downlink slot of the first band, and simultaneously, receive a radio frequency signal of a second band from the terminal device in an uplink slot of the second band; or
configured to: receive a radio frequency signal of the first band from the terminal device in an uplink slot of the first band, and simultaneously, send a downlink signal of the second band to the terminal device in a downlink slot of the second band, wherein
there is an association relationship between an uplink-downlink slot configuration of the first band and an uplink-downlink slot configuration of the second band.

17. The network device according to claim 16, wherein the association relationship comprises:
the uplink-downlink slot configuration of the first band is opposite to the uplink-downlink slot configuration of the second band.

18. The network device according to claim 17, wherein the radio frequency processing unit comprises:
a switch, a first band filter, and a second band filter, wherein
the switch is configured to select the second band filter in the uplink slot of the second band; or
is configured to select the first band filter in the uplink slot of the first band.

19. The network device according to claim 18, wherein the radio frequency processing unit further comprises an interference cancellation module, and
the interference cancellation module is configured to cancel an interference signal on a receive channel of the network device.

20. The network device according to any one of claims 16 to 19, wherein the network device further comprises a baseband processing unit, and the radio frequency processing unit further comprises a radio on chip, a power amplifier, a circulator, a filter, an antenna, and a low noise amplifier, wherein
in the downlink slot of the first band, the baseband processing unit is configured to convert a baseband signal into a digital intermediate frequency signal, the radio on chip is configured to convert the baseband signal into the radio frequency signal of the first band, the power amplifier is configured to convert the radio frequency signal of the first band into a high-power radio frequency signal of the first band, the circulator is configured to unidirectionally transmit the radio frequency signal of the first band, the filter is configured to filter out a clutter of the radio frequency signal of the first band, and the antenna is configured to transmit the radio frequency signal of the first band; and
simultaneously, in the uplink slot of the second band, the antenna is further configured to receive the radio frequency signal of the second band, the filter is further configured to filter out a clutter of the radio frequency signal of the second band, the circulator is further configured to unidirectionally transmit the radio frequency signal of the second band, the low noise amplifier is configured to amplify the radio frequency signal of the second band, the radio on chip is further configured to convert the radio frequency signal of the second band into an analog intermediate frequency signal, and the baseband processing unit is further configured to convert the analog intermediate frequency signal into a baseband signal.

21. A network device, applied to a TDD system, and comprising a transceiver unit and a processing unit, wherein
the transceiver unit is configured to: send a first downlink signal to a terminal device through a downlink slot of a first band, and simultaneously, receive a first uplink signal from the terminal device through an uplink slot of a second band, and there is an association relationship between an uplink-downlink slot configuration of the first band and an uplink-downlink slot configuration of the second band; and
the processing unit is configured to: generate the first downlink signal and process the first uplink signal.

22. The network device according to claim 21, wherein the association relationship comprises that the uplink-downlink slot configuration of the first band is opposite to the uplink-downlink slot configuration of the second band.

23. The network device according to claim 22, wherein the transceiver unit is further configured to: receive a second uplink signal from the terminal device through an uplink slot of the first band, and simultaneously, send a second downlink signal to the terminal device through a downlink slot of the second band; and
the processing unit is configured to: generate the second downlink signal and process the second uplink signal.

24. The network device according to any one of claims 21 to 23, wherein the terminal device comprises a first terminal device and a second terminal device; and
the transceiver unit is further configured to send the first downlink signal to the first terminal device through the downlink slot of the first band, and simultaneously, receive the first uplink signal from the second terminal device through the uplink slot of the second band.

25. The network device according to claim 24, wherein the uplink-downlink slot configuration comprises an indication of an allocation ratio of uplink slots to downlink slots.

26. The network device according to claim 25, wherein the processing unit is further configured to determine the uplink-downlink slot configuration in a preset manner.

27. The network device according to claim 25, wherein the processing unit is further configured to determine the uplink-downlink slot configuration based on band information.

28. The network device according to claim 27, wherein the first band comprises one or more independent bands, and the second band comprises one or more independent bands.

29. The network device according to claim 27, wherein the first band comprises one or more sub-bands of a broadband, and the second band comprises one or more sub-bands of a broadband.

30. A terminal device, applied to a TDD system, wherein the terminal device comprises:
a transceiver unit, configured to: receive a first downlink signal from a network device through a downlink slot of a first band, and simultaneously, send a first uplink signal to the network device through an uplink slot of a second band, wherein there is an association relationship between an uplink-downlink slot configuration of the first band and an uplink-downlink slot configuration of the second band; and
a processing unit, configured to: generate the first uplink signal and process the first downlink signal.

31. The terminal device according to claim 30, wherein the association relationship comprises:
the uplink-downlink slot configuration of the first band is opposite to the uplink-downlink slot configuration of the second band.

32. The terminal device according to claim 31, wherein the transceiver unit is further configured to:
send a second downlink signal to the network device through an uplink slot of the first band, and simultaneously, receive a second downlink signal from the network device through a downlink slot of the second band.

33. The terminal device according to any one of claims 30 to 32, wherein the uplink-downlink slot configuration comprises an indication of an allocation ratio of uplink slots to downlink slots.

34. The terminal device according to claim 33, wherein the first band comprises one or more independent bands, and the second band comprises one or more independent bands.

35. The terminal device according to claim 33, wherein the first band comprises one or more sub-bands of a broadband, and the second band comprises one or more sub-bands of a broadband.

36. A communication apparatus, comprising a processor, wherein the processor is coupled to a memory, the memory is configured to store a program or instructions, and when the program or the instructions are executed by the processor, the apparatus is enabled to perform the method according to any one of claims 1 to 9 or the method according to any one of claims 10 to 15.

37. A readable storage medium, wherein the readable storage medium stores a computer program or instructions, and when the computer program or the instructions are executed, the method according to any one of claims 1 to 9 or the method according to any one of claims 10 to 15 is performed.

38. A computer program product comprising instructions, wherein when the computer program product runs on a computer, the computer is enabled to perform the method according to any one of claims 1 to 9 or the method according to any one of claims 10 to 15.

39. A communication system, wherein the communication system comprises the communication apparatus according to claim 36.
